# EUROPEAN PATENT SPECIFICATION

(11) **EP 3 816 758 B1**
(45) Date of publication and mention of the grant of the patent: **17.01.2024**
(21) Application number: 20201674.7
(22) Date of filing: 14.10.2020
(51) Int. Cl.: G05D 1/10, G01C 21/34, G08G 5/00

(54) **GRID-BASED MOVEMENT CONTROL**
GITTER-BASIERTE BEWEGUNGSSTEUERUNG
CONTRÔLE DE MOUVEMENT BASÉ SUR UNE GRILLE

(30) Priority: 17.10.2019 FI 20195897
(43) Date of publication of application: 05.05.2021
(73) Proprietor: Nokia Solutions and Networks Oy, 02610 Espoo (FI)
(72) Inventor: SUVITIE, Arto Kristian, 00930 Helsinki (FI)
(74) Representative: Whiting, Gary

(56) References cited:
- EP-A1- 2 172 825
- WO-A1-2013/191967
- CN-B- 103 528 586
- KR-A- 20110 026 776
- US-A1- 2006 149 465
- US-A1- 2018 051 991
- US-A1- 2019 051 198
- US-B1- 6 259 988

## Description

### Field

The present disclosure relates to apparatuses for movement control of a device.

### Background

A vehicle or other movable device may operate autonomously or semi-autonomously based on control instructions defining movement between two locations. Control instructions may relate to various aspects of a path of movement the device shall follow. For example, instructions regarding turns, altitudes, speed, acceleration, breaking, obstacles and locations to avoid and so on may be provided. The control instructions can be provided by a control apparatus. The control apparatus can be remote. Alternatively, or in addition, at least a part of the control instructions may be provided by on-board processor apparatus. Control instructions may be provided from a remote apparatus for an unmanned device, for example, via an appropriate data communication system, for example over a wireless link.

An autonomous device can be defined as a device that is not under direct control of a human operator. An example of autonomous devices are unmanned vehicles, such as aerial vehicles (e.g. unmanned aerial vehicles (UAVs); often referred to as drones), land vehicles and watercraft and other vessels. Non-limiting examples of land vehicles comprise moving vehicles such as automotive (e.g., driverless cars, vans, heavy good vehicles, motorcycles etc.), industrial automatic guided vehicles, farming, forestry, gardening, cleaning, clearing, and surveillance and/or local control equipment and so forth. Further non-limiting examples of unmanned moving devices comprise machines such as robots, manipulators and other machines that can move in an area or space without need of direct control by a human operator.

Movement of a device can be controlled remotely by sending via a communication link control instructions from a separate control apparatus defining a path of travel to be followed. At least part of the processing may take place at the moving device.

An area where the device may move and needs to be controlled may be large. Processing the necessary information may require considerable data processing and/or memory capacity. Controlling paths of movement may cause latency and/or overhead issues.

US20060149465A1 discloses a method of moving in a minimum cost path using a grid map, including calculating a move cost to a goal, from each of a plurality of cells comprised in a space in which a mobile home appliance moves, and planning a movement path to the goal according to the move cost; determining one or more via points at which a direction changes on the movement path; planning the minimum cost path from the movement path by selecting one or more shortest-distance via points from the via points; and moving from a first shortest-distance via point to a second shortest-distance via point.

US6259988 discloses a hybrid of grid-based and graph-based search computations, together with provision of a sparse search technique effectively limited to high-probability candidate nodes provides accommodation of path constraints in an optimization search problem in substantially real-time with limited computational resources and memory.

KR20110026776A discloses a multi-path planning method for a robot to minimize the probability of omission of local minima by setting the size of grid cells in a grid map according to the properties of the robot and to reduce the amount of computation by changing obstacles into square shapes so as to simplify modeling.

### Summary

The invention is defined by the appended independent claim 1.

Specific aspects are defined in the dependent claims.

The invention relates to a vehicle or other movable device, for example an unmanned aerial vehicle, unmanned land vehicle or unmanned vessel. Means for receiving control instructions from a remote station may be provided.

For a better understanding of the invention, there is provided a method of determining travel between a first point and a second point, the method comprising: determining an initial path past an obstacle between the first point and the second point, the initial path comprising at least two turn points between the first point and the second point; and in response to determining that a line between two of the points bypassing at least one of the turn points does not intersect the obstacle, removing the at least one turn point from the initial path to determine a straightened path of travel.

The determining of the initial path may comprises using a grid on the area of travel. The determining whether the line between the two of the points bypassing at least one of the turn points intersects the obstacle may comprise using grid cells and/or real-world coordinates of the area. A conversion between grid cells and real world coordinates may be provided.

At least one local grid on may be determined on an area around at least one obstacle. A separate initial path of travel past the at least one obstacle can be determined using the local grid. At least two obstacles can be covered by a single local grid.

The method may comprise repeatedly determining if a line between two points bypassing at least one intermediate turn point intersects with the obstacle until there are no more points to be tested.

The method may comprise padding a grid covering at least one obstacle.

In accordance with an example a method for understanding the invention comprises configuring patterns covering sectors of a controlled area, the configuring comprising determining at least one pattern that has at least one obstacle to movement in the area, dividing the determined at least one pattern into smaller patterns, determining at least one of the smaller patterns with at least one obstacle to movement in the area, repeating the dividing step until predefined smallest pattern size is reached can be applied in combination with the grid based pathfinding and/or path straightening methods.

Determined travel between a first point and a second point can be defined by a determined at least one pattern, the method comprising generating a path of movement for a device based on a combination of information of the determined travel between the first point and the second point and a search path outside the at least one pattern.

The path finding methods may only be applied to patterns that have been determined to have at least one obstacle to movement. Any path of movement in an area outside the determined patterns can be generated based on assumption that there are no obstacles to movement within the area outside the determined patterns.

### Brief description of Drawings

Some aspects will now be described in further detail, by way of example only, with reference to the following examples and accompanying drawings, in which:
Figure 1 illustrates an example of an unmanned device controlled at least in part based on instructions from a remote control apparatus;
Figure 2 shows an example of control apparatus for an unmanned device;
Figures 3A - 3D show initial path finding stages according to an example;
Figures 4A - 4E show path clean-up operation according to an example;
Figure 5 shows an example of an intersection check;
Figures 6A - 6F show a further example;
Figure 7 is a flowchart for operation according to an example;
Figure 8 is an example of a shared grid;
Figures 9A and 9B show an example of padding;
Figures 10, 11 and 12 illustrate a path generation operation according to certain examples;
Figure 13 is a flowchart for operation according to an example, and
Figures 14 and 15 show further examples.

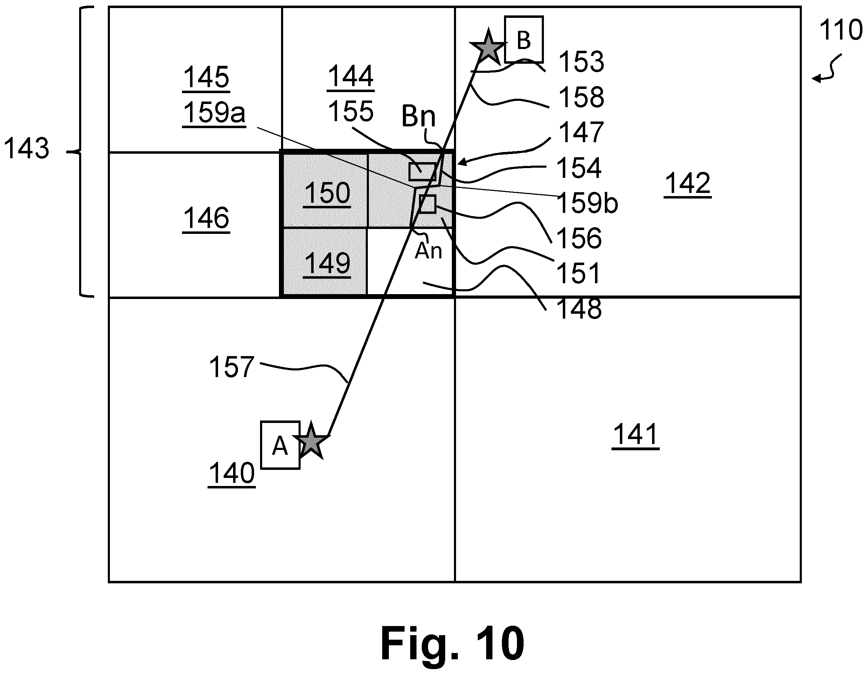

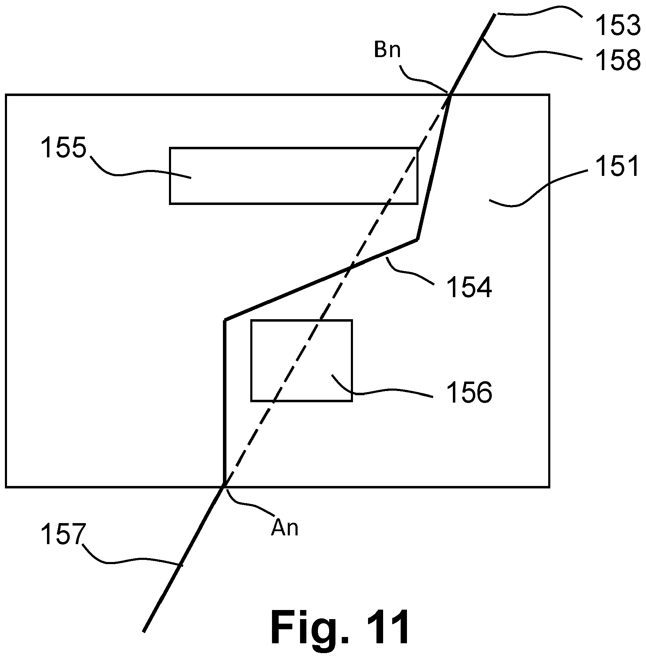

Figures 10 and 11 relate to embodiments of the invention as defined in the claims. Additional examples and aspects are presented in the figures for a better understanding of the invention.

### Detailed description of examples

In general, the following detailed description is given with reference to movable devices such as vehicles that operate based on control instructions received from a remote control apparatus. It is, however, noted that although the detailed examples are given in the context of unmanned vehicles, or autonomous vehicles receiving control instructions from separate control apparatuses, the determinations and computations may also be provided partially or entirely by control apparatus provided on the moving device itself.

The examples relate to control instructions for paths of travel, in particular instructions to avoid prohibited zones such as no-fly zones (NFZ) and other no go areas. Such areas can be referred to as items relevant to movement or simply as obstacles. Different methods may be used to generate path between the starting and target points wherein at least one prohibited zone may occur in the path. For example, a path planning system may be based on use of a grid structure to cover whole path area, a grid created using zooming tiles, or a grid created around the prohibited zone(s), in order to avoid travelling through a prohibited zone. In the following various alternative solutions are provided. There are different benefits to choose one or more of these when generating the path. The whole path may have segments or sectors which are created by different ways, for example.

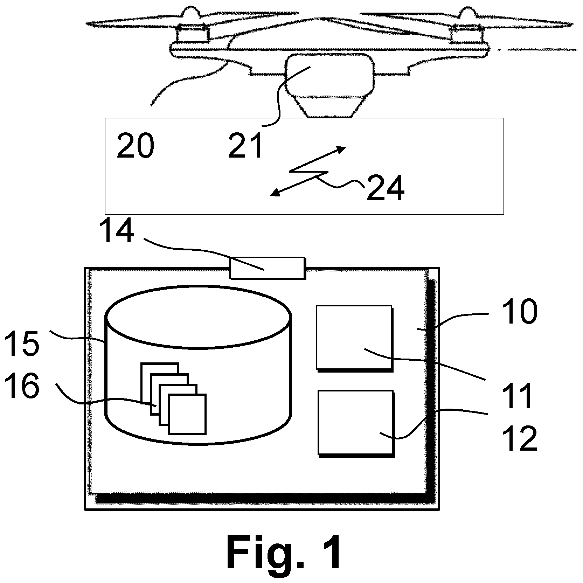

Figure 1 shows a control apparatus 10 configured for remotely controlling an unmanned device. In the example the device to be controlled comprises an unmanned aerial vehicle (UAV) 20. It shall be appreciated that the term "unmanned" does not mean that there is no human on board. Rather, the term refers to devices that can operate and move without direct human control, regardless of the presence of humans on board. In the case of UAVs, control of operation may be provided, for example, by a ground control station (GCS) configured to provide control instruction for and communicate with at least one unmanned aerial vehicle. A type of unmanned aerial vehicles is known as "drones".

The control apparatus 10 can comprise at least one processor 11, 12 and at least one memory 15. The at least one memory 15 comprises computer code that, when executed on the at least one processor, causes the apparatus to perform one or more of the herein described functions. The control apparatus 10 can be configured to communicate via appropriate data communication system using appropriate one or more communication protocols. The communications may be via local networks, wide area networks or even direct communications between the control station and the unmanned device. For example, communication may be based on 4^{th} or 5^{th} generation (4G, 5G) communication systems and protocols, or any later developments of communication systems. The communications may be carried at least in part on wireless links 24. The protocols may be based an appropriate connectionless protocol. Thus the remote control station 10 is capable of sending messages to an on-board data processing apparatus of the unmanned vehicle 20. The control station may also be configured to receive messages from the unmanned vehicle. The control apparatus can comprise data communications circuitry, denoted by reference 14, for receiving and transmitting data. It is understood that although the communications circuitry and various possible components thereof are shown as one block, the circuitry can comprise a number of circuitries. Such circuitries may share at least some components between them.

Instruction data 16 is shown to be available at the at least one memory 15. The instruction data can comprise control instructions regarding path of travel, for example information about location coordinates to be followed to control, e.g., at least one of longitude and latitude, altitude, speed, acceleration, breaking, distance, and so on. Control instruction items for a path of travel are often called waypoints. Examples for determining instructions regarding the path of travel to the unmanned device 20 will be described below.

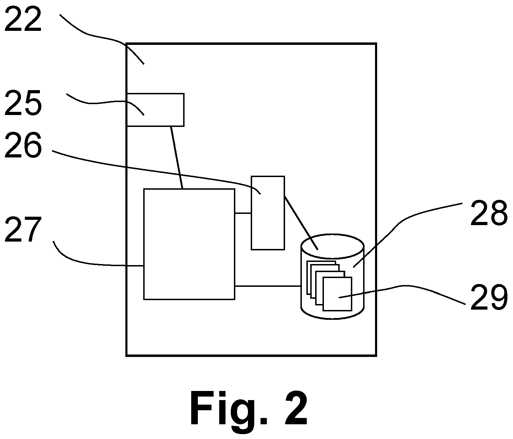

The unmanned aerial vehicle (UAV) 20 is configured to receive control information from the control station 10. The unmanned aerial vehicle of the example of Figure 1 comprises appropriate on-board data processing apparatus that can be located within the body 21 thereof and adapted for processing instructions from the control station 10 and controlling operation of the unmanned aerial device 20 accordingly. An example for the on-board data processing apparatus will be described with reference to Figure 2. The UAV apparatus 20 further comprises equipment for enabling the movement such as motors, rotors, and an energy source. For example, the apparatus may be powered by electrical energy, a chemical fuel, photovoltaic cells which power, in part or in full from light and so on.

Figure 2 shows an example of control apparatus 22 that may execute any of the herein described operations at a moving device. The apparatus 22 comprises at least one processor 26, 27 and at least one memory 28. The at least one memory comprises computer code that, when executed on the at least one processor, causes the apparatus to perform at least one of the herein described operations. The apparatus further comprises communications interface 25. The interface provides appropriate circuitry to enable receiving and transmitting of data by the control apparatus.

The memory 28 can provide a data buffering function for control instruction data 29. The at least one data processor can read the control instructions from the buffer and cause performance of operations relating to the task to be performed accordingly. The control apparatus may be configured to provide on-board data processing apparatus. The on-board data processing apparatus of the unmanned vehicle can generate autopilot-specific instructions from the received commands.

The control station 10 may receive telemetry information from unmanned vehicles under its control. For example, an unmanned vehicle may be configured to transmit mission progress information (e.g. information about the current waypoint and remaining distance, about near-by objects, fleet, other moving vehicles, other moving vehicles in a swarm of vehicles, sensor data from the device, and/or other devices and so on) to the ground control station. Information about the operating condition and/or state of the device may also be provided. For example, information about the remaining energy levels may be communicated back to the control station. The control station can then take the received information into account in the control actions, including in decision making regarding what to include in messages to the unmanned vehicle.

The following describes certain more detailed examples of determining movement paths for unmanned devices. Optimization of usage of computer resources such as processing power and dynamic memory for determining paths of movement are also described. The examples illustrate principles that can be applied to any unmanned vehicle or the like. For the purposes of illustration however the exemplifying device is specified to comprise an unmanned aerial device (UAV) and control apparatus adapted for sending of control data is referred to as a ground control station (GCS). A ground control station (GCS) computer can be configured to control one or more UAVs flying over large areas. GCS computer may comprise various features such as input and output equipment, display, keyboard, mouse, touchscreen, and so forth. The area controlled by a control station may be substantially large, for example 100x100 km or even larger.

Movement of unmanned moving vehicles such as aircraft, e.g. drones, land vehicles, watercraft, robots, and the like can be controlled based on path finding algorithms. For example, a control station such as a GCS can use specific path finding algorithms to create a safe and allowed path for a drone mission over an area. Path finding algorithms are configured to circumvent obstacles or no-go areas such as "Non Fly Zones" (NFZ) on the path. It is possible that operation area of, e.g., a drone in a GCS control area may have several Non Fly Zones. These areas can be closed for various reason for flights over them, or flights on some altitudes over them. NFZ size can be anything from a few meters to some hundreds of kilometres and can be of any shape. A controlled area may have any amount and distribution of NFZs. A GCS can use a path finding algorithm to generate optimal route for a drone from location A to location B so that crossing of any NFZs is avoided. NFZs are predefined in the maps data or applications used by GCS and they can be found in real-world coordinates as polygons.

In an example UAVs such as drones can navigate around no-fly zones using a two dimensional (2D) grid-based path finding algorithms. A non-limiting example of a possible path finding algorithm is a "Jump Point" path finding algorithm. "Jump Point" algorithms can be used for multiple random distributed NFZs of any shapes. "Jump Point" algorithms typically use uniform grid of open and closed nodes. The grid can be 2-dimensional {latitude, longitude} or 3-dimensional {latitude, longitude, altitude}. When a drone's path requires accuracy of a few metres then a grid for a "Jump Point" algorithm needs to have a step length of a few meters. This can consume substantial amount of memory capacity. For example, grid with a 2m step for an area 2000x2000m takes 1 Mbyte of computer dynamic memory in 2-dimensional (2D) case and 100 Mbytes for 3-dimensional (3D) case, assuming typical altitude range from 0 to 300m. For an area of 1 00kmx1 00km 250MB for 2D and respectively 25GB for 3D would be needed. That may exceed available memory resources of a GCS computer and/or vehicle and make the algorithm slow, especially on a large grid.

A two-dimensional path finding grid can be created on top of a real-world plain area map and presented on a display of ground control station or other computer. The initial inputs in a grid can include the drone/UAV coordinates, target coordinates, and no-fly zone(s) coordinates. The grid is configured to define drone location, target location and no-fly zone(s). Grid cells touching a no-fly zone can be marked as obstacles in the grid. A 2D grid based path finding algorithm (for example a Jump-Point Search) can be applied to a grid to generate an initial path of travel.

In further example embodiments cells are using middle point of each cell as potential waypoint of the path. If the middle point of cell of grid is covered by obstacle, cell is blocked. Blocked means that the cell cannot be used as part of path in grid based path finding algorithm, for example. Otherwise the grid can be used as free cell and can be used in the path. The path calculated follows the middle point of selected free cells as waypoints around the obstacles. The use of grid avoids the calculations of added dot markings on the display. The number of dot markings may be not exact and in case of many dots it might make the calculation problematic in digitalized environment and accuracy is decreasing.

Furthermore, in an example embodiment there are two points of initial path which intersect with outer grid area around the obstacle. The first intersection point is in that side of grid which is directing the start of path and second intersection point in that side of grid which is towards end of path. The intersection points corresponding cells of grid, respectively, are selected as start and end points of the path search algorithm like grid based path finding algorithm. The algorithm is run.

In an example embodiment when the waypoints are in consecutive order, first three waypoints may be used, for example. First three waypoints may be started from different points. Intermediate (center) waypoint is located between first and third waypoints of the three consecutive waypoints. Depending on the situation the intermediate waypoint may be used in the path or it can be removed. Intersection analysis may be continued or repeated with next selected points until there are no further removal in the selected three consecutive points, for example.

In an example embodiment after the path between two points of initial path which intersect with outer grid area around the obstacle is finished, the path obtained from grid based path finding algorithm is combined with the initial path to compose the final path.

The path cell coordinates can be converted to real-world coordinates and other way around. Conversion between real world map coordinates and computational grids as such is a feature of mapping and pathfinding products. Thus real world x and y coordinates can be used in a path finding algorithm and conversion provided to and from latitude and longitude using a grid based system which has a conversion functionality.

In accordance with the herein disclosed principles the initial path is cleaned-up from excess waypoints by looping through path waypoints. Examples of the clean-up will be described in more detail below.

In case of a long distance between a start location and a target location and scattering of no-fly zones around the area, the grids can be created locally around no-fly zones that are on the direct path from start to target. Local grids can then be solved separately.

In accordance with an aspect, for multiple overlapping or close no-fly zones a shared local grid may be generated which covers the overlapping or close no-fly zones.

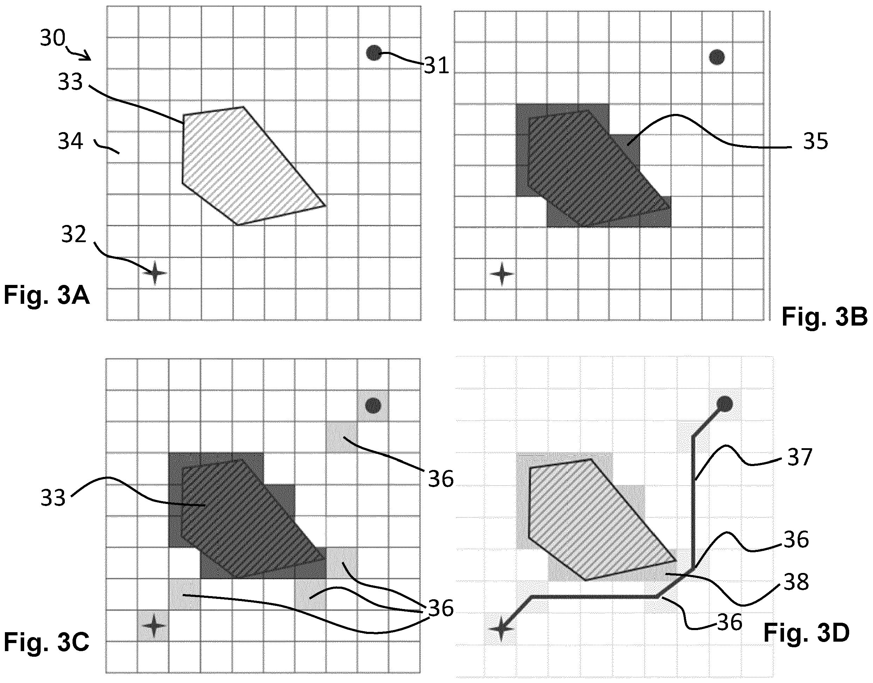

Figures 3A, B, C and D show possible initial stages for path finding on a screen. In the example a 2D grid corresponding to a real-world area is created for a drone. Figure 3A shows a 2D grid 30 created on top of an area of interest. A start location 31, a target location 32 and a no-fly zone 33 are also shown. Input values for a path finding algorithm from start location to target location without crossing the no-fly zone can comprise coordinates at the start, coordinates at the target location, and a no-fly zone polygon coordinates. The various locations may represent the coordinates of the start and target locations of a drone or another autonomous vehicle and or locations in the path between the start and target locations.

The grid 30 comprises cells 34. A non-limiting example of the cells size is 2m x 2m cells for drone, for example. Cell about this size have proven to work well in practice. However, differently sized cells may be used. Small cells can be used to obtain a more accurate path. On the other hand, larger cells would give more performance. Thus optimisation of the cell size may be desired. There may also be desire to be able select the cell size based on needs of the particular use. Smaller cells provide more accuracy and larger cells will provide more performance.

Grid cells touching a no-fly zone can be marked as obstacles. In Figure 3B such cells are denoted by reference 35. Finding of obstacle cells can be done, for example, by looping through all grid cells and checking if a centre point of a cell is contained inside the no-fly zone polygon.

The grid-based path finding algorithm can then be applied to the grid to find waypoints 36 (the waypoint cells are shown in light grey) around the obstacle 33. For example, a jump point search algorithm may be applied to the grid at this stage. The resulting turning cells, i.e., waypoints 36 around the obstacle 33 found by jump-point search algorithm are shown in Figure 3C.

Obtained path cell coordinates can then be converted to real-world coordinates to provide an initial rough path 37 via the waypoints 36, this being shown in Figure 3D. The operation can also be other way around, i.e. real world map coordinates can be converted to grid cell coordinates.

The 2D grid based algorithm may only support movement in eight directions, and because of this the initial rough path 37 may comprise one or more excess waypoints, and thus unnecessary turns. A clean-up operation may be provided to remove any possible excess waypoints.

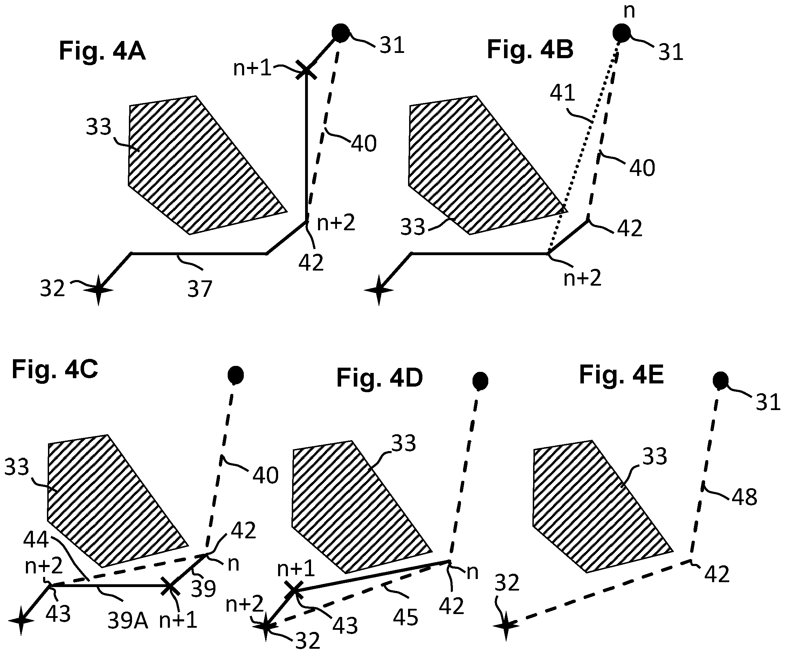

A clean-up algorithm may comprise looping through the waypoints 36 on the initial path 37 to check if any of these can be removed. Figures 4A to 4E illustrate an example for the looping. In this example a line from waypoint n to n+2 is created for each waypoint n (n goes from 0 to full length - 2). If the line between n to n+2 does not intersect with the no-fly zone 33, waypoint n+1 can be removed. Otherwise, n is incremented by 1.

Instead of n being an integer, a non-integer or decimal number, for example, may also be used. The latitude and longitude can be calculated, e.g., by distance to the point (n+1)/p or (n+2)/p from n, where p can be integer. This might be case, e.g., when another NFZ is located at the other end of a route.

In Figure 4A n = the start point 31 of the initial rough path 37. Because there is no intersection by the line between n and n+2, waypoint n+1 of the initial path 37 can be removed. As a result, the path is straightened by replacing the path segment via waypoints n, n+1, and n+2 with a new straight path segment 40 between waypoints n and n+2 (denoted by reference 42).

In Figure 4B a next check is made using the start point 31 again as n=0, the end point 42 of segment 40 as n+1, and the next waypoint as n+2. It is determined that line 41 between n and n+2 would intersect the obstacle 33. Thus waypoint 42 is confirmed as a valid waypoint and line 40 can be made a segment of the final path.

The looping can now progress to the step shown in Figure 4C where waypoint n=0 is provided by the end point 42 of path segment 40. The determination reveals that the straight line 44 connecting waypoints n and n+2 does not intersect the obstacle 33 and length of straight line 44 is less than combined lengths of lines 39A and 39. Thus waypoint n+1 can be removed, and the path straightened by replacing the path segment via waypoints n, n+1, n+2 with a new path segment 44.

In Figure 4D a check is made using waypoint 42 again as n=0, the end point 43 of segment 44 as n+1, and the target point 32 as n+2. It is determined that line 45 between n (denoted by reference 42) and n+2 (denoted by reference 32) would not intersect the obstacle 33 and the length of line 45 is less than is the length of the segment going through turn point 43 on the initial rough path. Thus point 32 is confirmed as a valid next point, waypoint n+1 (the turn point denoted by reference 43) is ignored, and line 45 is made a segment of the final path.

A problem is how to find a straightened line. If the path is calculated by grid based or tile based algorithm, for example, the determined path may not necessarily be the straightest. For straightening turn points (e.g. waypoints) calculated from the algorithms may be used together with start and target points in the path. The path may be straightened by calculating the distance from start point through first turn point to second turn point. If the line from the start point to the second point is not intersecting the obstacle, and the distance is less than the distance through the start, first and second points, the straightening may be provided and the first turn point is not needed (point n+1 in Fig. 4A). Next the straightening action can relate to second and third turn points from start point (see Fig. 4B). In that case the line between the start point and the third turn point intersects the obstacle and straightening is not possible. In Fig. 4C the second, third and fourth turn points are under consideration. If the line between the second and the fourth turn points is less than the length of the path through the second, third and fourth turn points the line between the second and the fourth turn points can be used in the path and the third turn point may need not be used. In Fig. 4D the line may be further straightened between second turn point and the target point. The fifth turn point may not be used. There may be one or more straightening need in the path and Fig. 4 is an example where the straightening is possible in three cases and not used in one case. In this solution the three points are needed from the group of start, target and turn points. Line intersection algorithm may be used, for example. The order of straightening steps is an example. The point coordinates may be used in the computations.

Figure 4E illustrates the final, cleaned path of travel 48. The looping clean-up algorithm can stop in response to detection that there are no n+2 waypoints left in the initial rough path.

In this example the check was made in view of n+2 waypoints. However, a check can also be made in view of a waypoint further ahead. That is, instead of having a loop where the testing is based on n+2 the looping can be based on testing n+m where m greater than 2. If there is no intersection, any intervening waypoints (n+1 to m-1) may then be ignored at once.

Line intersection checks can be done using real world coordinates instead of grid cells. If need, conversion between the real world coordinates and grid cells can be provided. Use of real world coordinates may provide some advantage, e.g., in view of better accuracy. E.g., the check at the step of Figure 4C would result a detection of an intersection with the obstacle 33 if the check was made using the cells of the grid 30 of Figures 3A to 3D. That is, the line would cross cell 38, and be determined as an intersecting line.

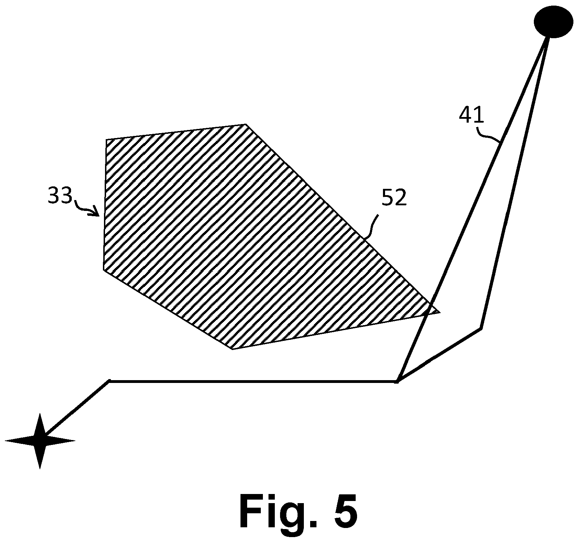

Any appropriate line intersection check algorithm can be used for the check. In computations, x and y coordinates can be replaced with latitude and longitude values. A non-limiting example of the intersection check is shown in Figure 5. Line 41 is compared sequentially to the five border lines (sides 1 to 5 of the polygon) that define the no-fly zone polygon 33. On a second iteration, an intersection is detected at least with line 52 (2) where after the algorithm stops. This corresponds to the situation of Figure 4B. After line intersection check algorithm stops, next step is to either to continue to check the intersection of next line of polygon and if that was the last line of polygon then continuing to next line of the path (starting from next turn point n).

In accordance with a further example a long distance path is determined from start to target in environment where there are one or a number of no-fly zones scattered in the area. A problem in such circumstances may arise because of a possible need of a substantially large grid, and this may not be feasible for performance reasons. A way of addressing this is to create one or more grids or a combination of grids around the one or more no-fly zones that are on the direct path from start to target. The paths within the one or more grids can be solved as explained.

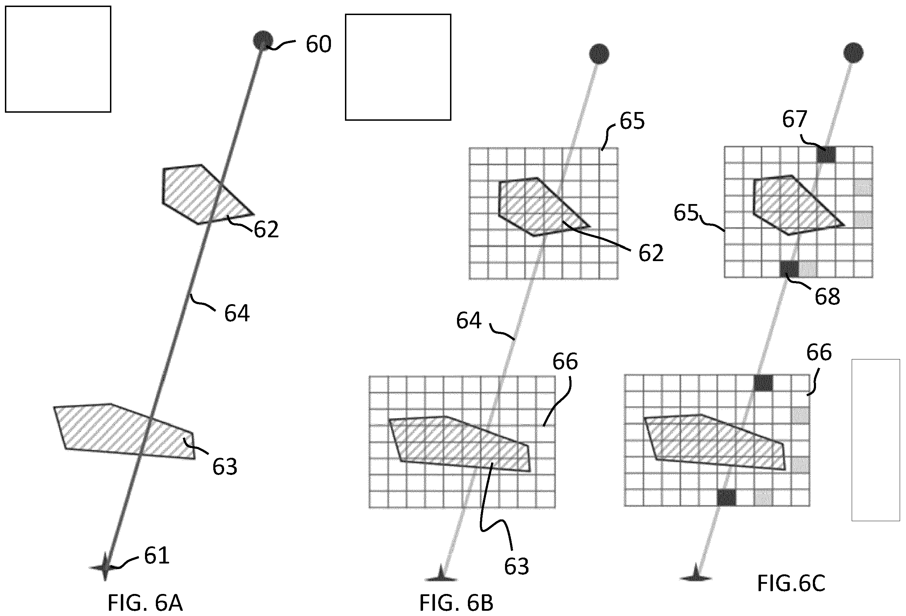

Such situation is illustrated in Figure 6A. More particularly, it can be determined that NFZ's 62 and 63 are on a direct line 64 between start and target points 60 and 61. The detection may be based on a line-polygon intersection algorithm, e.g. line-rectangle intersection (with NFZ bounding box), or line-point distance check using NFZ center and distance to furthest vertex, for example.

The direct parts of path are usually much longer than the parts of obstacle, in drone paths, for example. One reason is that obstacles are tried to be reduced in the path planning. The paths in the air are less crowded with obstacles and more freedom is possible to determine the path, for example. The path on the ground are having more obstacles in the paths compared to air where drones are used and therefore more grid based algorithm calculation in the path on the ground is needed and also the whole path can use grid based algorithms.

Drones as flying objects need power efficiency, and less computation is better enhancing flying time, for example.

Local grids 65 and 66 can then be created around relevant NFZs 62 and 63, see grids in Figure 6B. The other NFZs can be ignored.

If the middle point of cell is covered by the obstacle, cell is blocked. Blocked means that the cell cannot be used as part of rough path waypoint in grid based algorithm. Otherwise the grid cell, if the middle point of cell is not covered by obstacle, can be used as free cell, i.e. middle point as waypoint can be used in the initial path.

As known the real-world coordinates are in a form of "latitude, longitude" or normal wgs84 coordinates. Coordinates for grids start (0, 0) from left top corner of the selected grid covering obstacle and are integers. When grid is created it may be created to some area in the world, i.e. area of the obstacle. The creation may be done so that real world coordinates corresponds grid cell (0, 0). The size of cell of grid is 5m, for example, it describes how much the coordinate changes between the cells. For example, in a grid with cell size of 5m, the cell (10, 5) is defined to be 50m to the East and 25m to the south of cell (0, 0).

Pathfinding as explained above can be applied to each grid to determine rough paths through the grids 65 and 66. This is illustrated in Figure 6C. The start points within the grid can be the points / cells of entrance and exit. In grid 65 there are cells 67 and 68, respectively. Sizes of cells of grid may be at least in part based on safety margin so that collision of vehicle with the NFZ or obstacle is avoided.

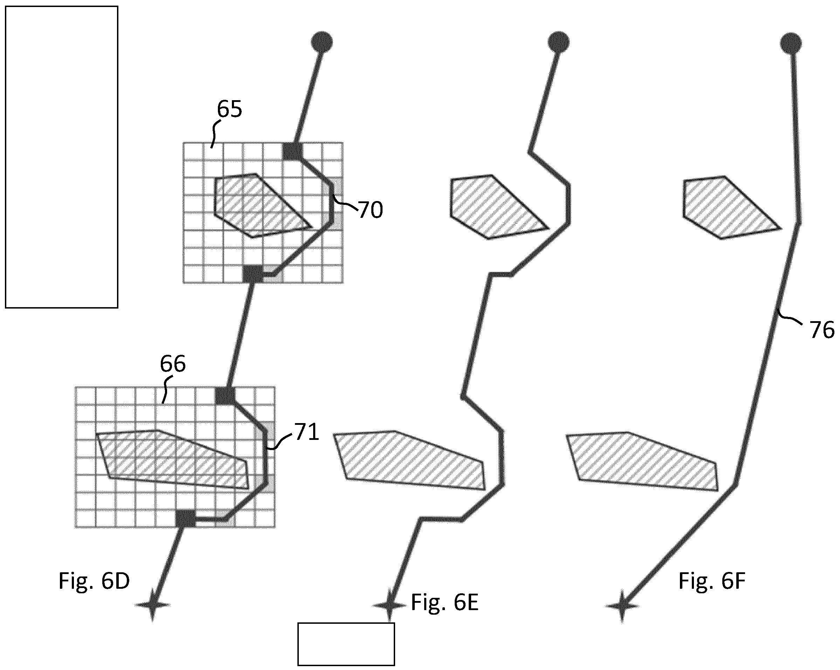

In Figure 6D initial rough paths 70 and 71 are determined through local grids 65 and 66, respectively. In Figure 6E the combined rough path is subjected to cleaning operations. The local grids can be cleaned in parallel operations, or one by one.

Figure 6F illustrates the cleaned final path 76. The cleaning may be provided for example as described in Figures 4A - 4E.

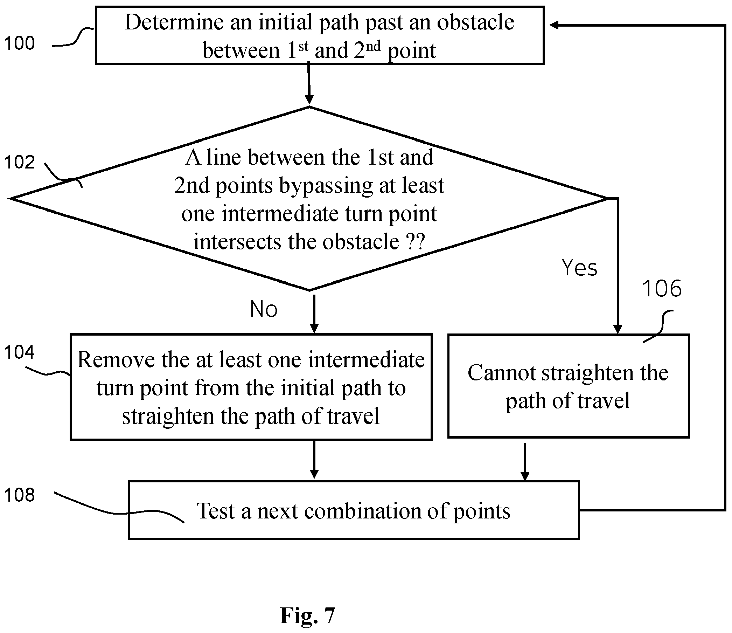

Figure 7 shows a flowchart according to an example for a method of determining a path of travel between a first point and a second point. In the method an initial path past an obstacle between the first point and the second point is first determined at 100. The initial path can comprise at least two intermediate turn points between the first point and the second point. The at least two intermediate turn points are points of travel where the direction of travel changes. It can then be determined at 102 whether a line between two of the points bypassing at least one of the turn points intersects the obstacle. The line can start form the first point and end at one of the turn points or at the second point. If the line does not intersect the obstacle, the at least one turn point can be removed at 104 from the initial path to determine a straightened path of travel. The testing can then move to testing of a next combination of points at 108 until all points are tested.

If the line tested does intersect with the obstacle, it can be determined at 106 that the straightening is not possible. Testing can then be repeated at 108 for a next combination of points.

At the repeat stage it is possible to use the next point on the initial path as a starting point. Alternatively, if two or more intermediate points were bypassed at the previous test cycle the next test cycle may try with a lesser amount of intermediate turn points.

The determining of the initial path can comprise using a grid on the area of travel. The grid may be a local grid. The determining whether the line between two of the points passing at least one of the turn points intersects the obstacle can comprise use of the original or real-world coordinates of the area.

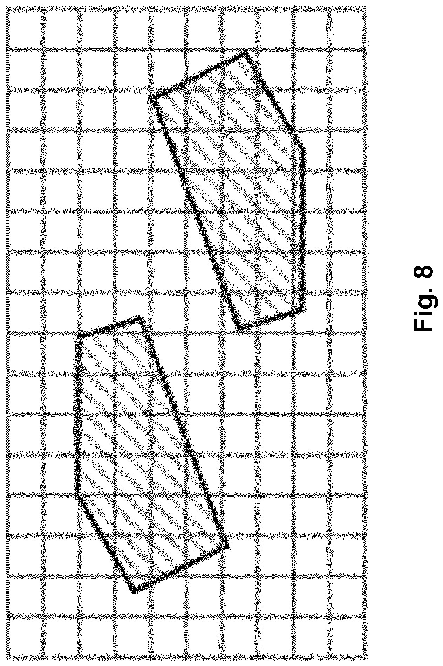

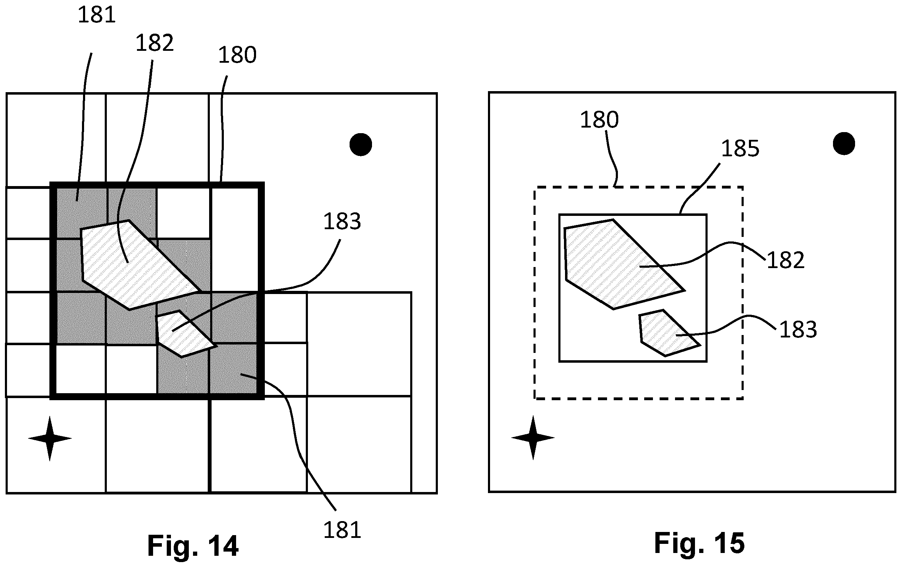

Multiple no-fly zones can be located such that use of local grids may produce overlapping local grids. A shared local grid may be generated that covers the two or more zones. A shared grid is illustrated in Figure 8. An example for defining a shared local grid is explained later with reference to Figure 15. Use of the shared grid may make it easier to find a path through an area than analysing overlapping or close grids. Shared grids may also reduce a risk of incorrect result caused by path finding algorithm on one grid producing a result path that could intersect with a no-fly zone present in an overlapping grid.

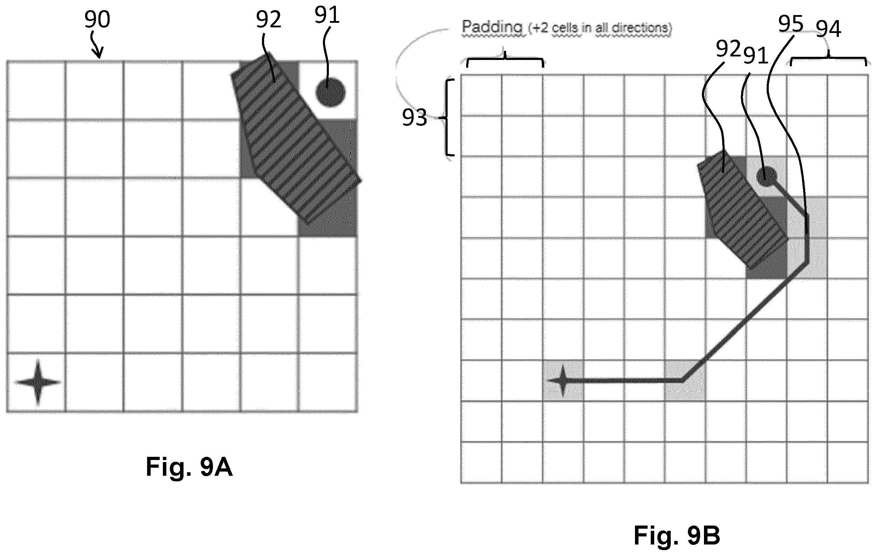

Grid generation may result a situation illustrated in Figure 9A where a path might not be found. This can be so because start and/or end point 91 may be located immediately next to a no-fly zone 92 on a grid 90. Padding can be used to resolve this. An example of padding is illustrated in Figure 9B where two rows 93 and columns 94 of cells are added on each side of the grid 90. An initial path 95 can be found around the nearby NFZ 92 despite the start point 91 being in a cell next to the NFZ.

In accordance with a further aspect further optimisation of use of local grids can be provided. In accordance with an example a controlled area can be divided in smaller geometrical patterns covering sectors of the area, the patterns comprising indication whether there are obstacles or not within the patterns. Instead of applying a path finding algorithm to the entire length of travel between locations A and B, the path finding algorithm can be applied selectively based on the indications to one or only some of the patterns in the route between locations A and B.

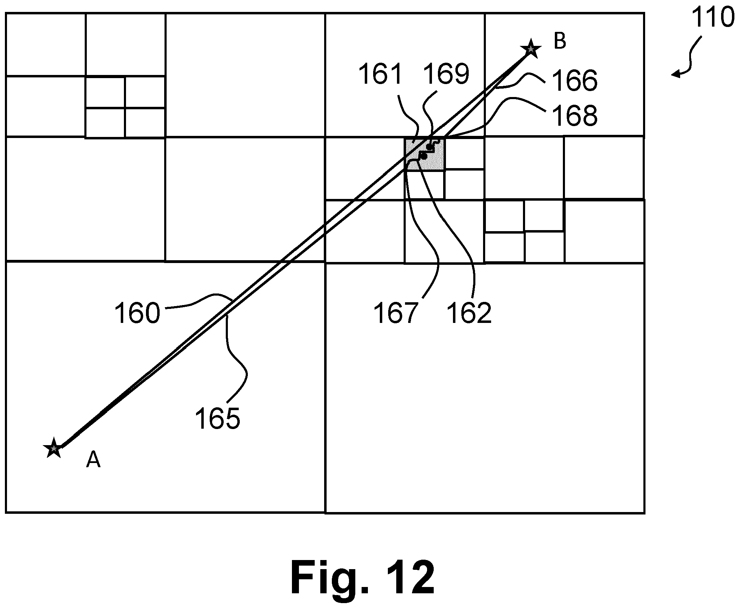

Examples of division of an area 110 to a multiple of patterns are shown in Figures 10 and 12. More particularly, division to rectangular patterns is shown. The size of the patterns can be altered depending on whether the patterns include items that shall be avoided by a moving device. The size of a sector covered by a pattern can be defined to be as large as possible based on information that the sector is free of travel hindering or endangering items such as physical obstacles, non-fly or no-go zones. If a large pattern comprises at least one such item, it can be divided into smaller patterns to make processing of the path finding a less demanding operation. These individual smaller patterns can be further examined to determine if any of them is free of such items. Those divided patterns with at least one relevant item can be further divided to identify more patterns defining sectors with no relevant items and smaller patterns with relevant items.

The process can be repeated until a predefined minimum pattern size is reached to find as many as possible patterns without items relevant to the movement in the area and smallest possible patterns with such items. That is, any of the smaller patterns still covering at least one relevant item is further divided, i.e., zoomed to yet smaller patterns until the smallest predefined pattern size is reached, thus giving a small area that can be processed with reasonable resources.

If a division of a pattern results smaller patterns where each of the patterns still covers at least one relevant item, it may still be considered advantageous to divide these patterns into next level of smaller patterns. The already divided patterns may still contain some smaller patterns that are free of relevant items, and thus it may be worth dividing to next zoom level, closer to, or until maximum zoom level. A jump point algorithm may then be used for the found tile with at least one relevant item.

In the following the process of dividing the patterns into smaller patterns is called zooming. A purpose of zooming is to reduce the size of pattern(s) covering area(s) with items to be avoided to its minimum where after a path finding algorithm needs to be used to avoid collision with the items only in the determined small pattern(s).

In the example of Figure 10 rectangular patterns 140 to 151 are shown to have three different levels of zoom such that patterns 140 - 142 have the largest zoom level. This can be so because these patterns do not cover any relevant items. Area 143 has been divided into smaller patterns 144 - 147 into the next zoom level because at least one relevant item has been defined to be located in the area 147. Area 147 has been further divided into the next zoom level where patterns 148 - 151 have reached the maximum zoom level, or to put it other way around, the predefined smallest pattern size. The zooming of patterns 147 is done because there are relevant items in the area. The smaller pattern 148 is free of any travel hindering items but grey smaller patterns 149 - 151 each are determined to have at least one relevant item within the coverage area thereof. Pattern 147 includes obstacles 155 and 156 and is determined to be on a search path 153.

The patterns can be called 'zoom tiles'. The zoom tiles can have zoom levels from 0 to Z_{Max}. A zoom tile of a level (or size) that does not cover any part of any obstacle item, for example NFZ, can be provided with an indication of this in the database of the control system. Such tile does not need any more zoom in for the reason that it is determined to be free of obstacles, i.e., there is a full freedom of movement within the tile. Thus such tile can be indicated as free movement area and there is no need for use of a specific path finding algorithm.

Any tile that does cover at least a part of any movement restricting obstacle item such as a NFZ is marked accordingly in the control system data. Determination of at least one item in the tile triggers zooming of the tile into a next level. As shown in the example of Figure 10, in zooming a tile can be divided in 2x2 smaller tiles for 2-dimentional case. For a 3-dimensional case the division can be to 2x2x2 smaller tiles. Other zooming ratios can be used, for example division of the tiles to 3x3 (or 3x3x3) or 4x4 (or 4x4x4), or division (splitting) of a tile to two or three tiles and so forth, depending on the application

The zooming operation is repeated until the defined maximum zoom level Z_{Max} is reached for a tile. Alternatively, in an example useful for understanding the invention, the zooming operation can be repeated until a tile is determined to be free of relevant items. A path finding algorithm can then selectively be applied to the tiles with relevant items on the maximum zoom level. Elsewhere it can be assumed that the drone or another autonomous vehicle has the freedom to follow a direct or otherwise desired path through the tiles.

Zoom tiles for a controlled area can be initialized once, e.g. when configuring the system at the time of it being taken into use and/or when maintenance is provided. Update may be needed only if there is a need to apply changes in movement obstacles in the controlled area. For example, a new high structure erected within the area may necessitate update of NFZ data in a GCS.

Zooming can be pre-set in the system and/or provided at runtime. In pre-set zooming the zooming data is defined in a database when the area is configured in the system database and then the already configured tiles are used when determining the flight path. In runtime operation the zooming is provided during path determining operation.

In the Figure 10 example a search path 153 for a vehicle, for example a drone, extends from location A to location B. Locations A and B may comprise longitude and latitude coordinates or locations may be converted to a location definition of the same type as has been used for start and target points. In this description illustrative label "white" tile is used to denote a tile free of items such as NFZs and illustrative label "grey" tile is used to denote a tile with at least one item such as a NFZ. Labels "white" and "grey" are only used to make the example easy to follow, and it shall be appreciated that this labelling is not intended to anyhow limit the ways how the patterns may be called, used or presented in a system operating according to the herein described principles. Similarly, NFZ is only an example of relevant items to be taken into consideration.

Any appropriate path search algorithm like 2D or 3D path finding search algorithm may be used for path determining within grey tiles that have reached the maximum zoom level. For example, a "Jump Point" algorithm may be used. In the example the shortest, i.e., direct search path 153 extends between locations A in tile 140 and B in tile 142. The search path 153 extends via the white tile 148 and the grey tile 151. As explained above, tiles 148 - 151 are on the maximum zoom level, the zooming from the previous level (area covered by tile 147) being needed because there is at least one NFZ in the area. Tile 147 comprising the smaller level tiles 148, 149, 150 and 151 is denoted by stronger border line for illustration purposes.

After zooming to the maximum level it can be determined that tile 148 is free of NFZs but tile 151 at the maximum zoom level has at least one NFZ. This triggers use of a path finding algorithm through tile 151 between tile entrance location, denoted by reference An, and tile exit location, denoted by reference Bn, i.e. intersecting parts of tile boundaries of the path. The final path of travel is a combination of the direct parts of the search path 153 through the white tiles 140, 148 and 142 and the product 154 of the path finding algorithm through the grey tile 151. In one example the tiles may be numbered sequentially with a first, second and third value, based on longitude, latitude and zoom level, respectively, illustrating the tile. Location points An and Bn can be calculated from the tile and the path A-B using calculated tile corner coordinates.

In one example embodiment GCS computer may monitor the path planning in relation to its memory usage or any other device having similar functionality. The path is created by adding waypoints between start and target points. If no NFZs are found in the path including start and target points, direct path is ok.

If the tile which comprises one or more NFZs in the desired path, the GCS computer may select different path finding algorithm in the tile where NFZs are found than for the other path having free of the NFZs based on, at least in part, memory needed for path planning.

The tile may have intersection points An and Bn with the path between A and B in Figure 10 for example. When zooming down within the tile to find smallest tile having the one or more NFZs, different path finding algorithm can be selected for the path between the smallest tile intersections An and Bn with path AB, for example. Figures 3A, B, C and D and partly Figure 6 illustrate possible initial stages for path finding around the obstacle, for example. Figures 4A - 4E as well Figure 5 and partly also Figure 6, for example illustrate the shortening/looping algorithm use in the path An - Bn or whole path A - B, relating to Figure 10 for example.

As the smaller the tile is, the more memory is used, the selection can be further influenced by algorithm memory use. It is one option to limit the zooming level by monitoring the memory usage of the GCS computer depending on the algorithm used. There may be a memory usage threshold until the memory usage is not any more useful. The threshold may be different for the used algorithm and/or depend on the zooming level. One or more of the selection criteria might be used in path finding algorithm selection. The jump point search algorithm for the tile, where NFZs exist/s, may be used, for example.

Looping clean-up algorithm is used for cleaning and shortening the paths and/or reducing one or more waypoints received by jump point search algorithm as described further in the application.

In one example embodiment when the predefined minimum zooming level is reached, the tile, which has the NFZs, jump point search algorithm for generating path around the NFZs can be selected for the NFZs, in Figure 10, for example. Further the looping clean-up algorithm may be used to the path received by the jump point search algorithm, for example. Furthermore, cleaning can be made to form path part of the product 154 of "A - An - corner 159a" to "A - 159a" to get shortened path by using coordinates of respective points as discussed later in the document. Also cleaning can be made to form path part of the product 154 of "corner 159b - Bn - B" to "corner 159b - B" using their coordinates of the concerned points to get shortened path as described in embodiments of Figures 10 and 4A - 4E, for example. Grid cell coordinates 159a and 159b may be configured to be converted to real world coordinates which are used in tiles, for example.

In some embodiments the zooming level may be limited to size of tile 143, i.e. coarser tile than the tile 151. In that case the path AB has used its memory, so that it cannot use other coarse grid based path finding algorithm for smaller tiles than size of tile 143.

Figure 11 shows an enlarged view of the grey tile 151 and two NFZs 155 and 156 covered by the tile 151. The direct search path 153 extends over both of the NFZs. The path finding algorithm can be triggered to determine a path 154 within the grey tile 151 between entrance location An and exit location Bn such that the path 154 circumvents the NFZs 155 and 156. The final path 153 created by the path search algorithm would then be a combination of paths 157, 154 and 158.

The path finding algorithm is needed for the area covered by the grey tile 151 since elsewhere there are only white tiles having no NFZ areas on the search path 153.

In operation according to an example, a path search algorithm from start location A to target location B starts with a search by tracing a direct line path from location A to location B on zoom level zero. If a found path does not go over any "grey" tiles it can be determined that there is a direct line A-B with length (A,B). Thus no detailed path finding operation and use of a specific path finding algorithm is needed.

The zoom level can be increased after determination of zoom level Z to zoom level Z+1. A determination can then be made if there is a path length through a particular grey tile on zoom level Z+1. If such grey tile is recognised, a further zoom level is analysed. At the highest resolution zoom level (Z_{Max}) a recognised at least one grey tile can then be subjected to a path finding algorithm after. This may be provided in response to determining by the path search algorithm that the search path goes through at least one grey tile at the zoom level Z_{Max}. The process can repeated for each "grey" tile until an optimal path between locations A and B has been found.

The number of zoom levels can depend on the application. For example, for certain outdoor applications a maximum zoom level Z_{Max} = 18 may be considered adequate. For certain indoor applications a maximum zoom level Z_{Max} = 21 may be considered adequate. However, these are only examples, and other zoom and considerably different number of zoom levels may also be used.

It is also possible that no path is found over a tile. If no way over a tile is found, any path involving the tile would be blocked as a result. The algorithm can be configured to find a shortest, or otherwise optimal, non-blocked path around the tile from several examined options. A path examination results a path length. If a path is blocked in a tile infinity can be added to the length of the path to select a shortest alternative path. When possible alternative paths have been analysed, simple sorting by length procedure can give a good, or even the best candidate. If infinity setting is used, all blocked path candidates can be placed at the end of the list of candidates. Blocked paths may also be removed from the candidate list.

It is also possible that the path finding algorithm returns to larger tiles, i.e. from analysis of zoom level Z+1 to zoom level Z. This may be desired, e.g., when there is ambiguity or no grey tile is found at the highest resolution zoom level.

Figure 12 shows another example where a direct search path 160 between locations A and B extends via grey pattern 161. The path finding algorithm is triggered because maximum zoom level is reached and there are still obstacles 169 in the pattern. However, the generated path 162 through the grey pattern 161 does not start and end at locations where the direct search path crosses the borders of the pattern 161. The path search algorithm can be configured to adjust the direct search path line 160 such that the resulting path of travel 165 enters the pattern 161 at location 167 and exits the pattern 161 at location 168 output by the path finding algorithm, and continues along line 166 to destination location B. The amended points 167, 168 can be provided by the grid based path finder.

The clean-up algorithm may output a path requiring alteration of the entrance and/or exit points. In such case the entire path between start and target locations may need to be altered accordingly.

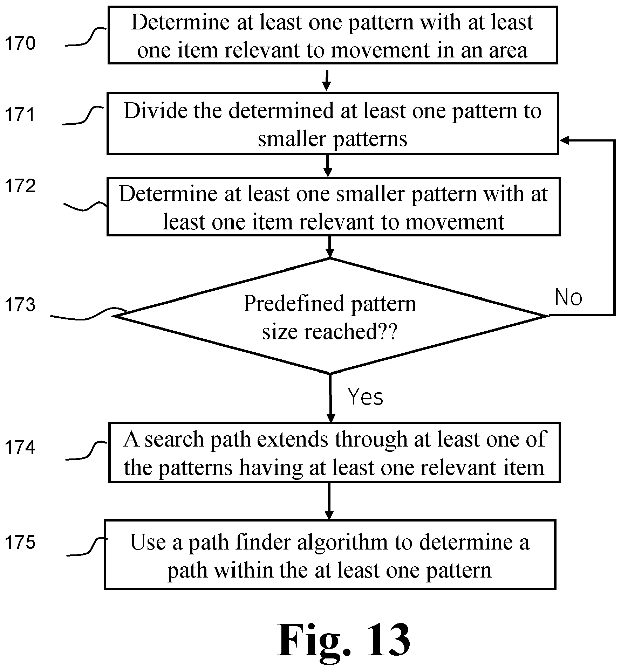

Figure 13 is a flowchart in accordance with an example. In the shown method for movement control of a device, patterns covering sectors of a controlled area are configured in data storage means. The configuring comprises determining at least one pattern that has at least one item relevant to movement in the area at 170. The determined at least one pattern is divided at 171 into smaller patterns. Thereafter it is determined at 172 that at least one of the smaller patterns has at least one item relevant to movement in the area. At 173 it can be determined whether the minimum pattern size has been reached. If not, the method returns to 171, and is now applied to smaller patterns. The dividing loop is repeated until predefined smallest pattern size is reached.

In one embodiment the pattern needed is identified by zoom level identifier of the pattern and/or pattern coordinates (comparing coordinates of one or more polygon lines with the search path line) and comparison with data in the obstacle database, or bounding box area of an obstacle.

It can then be determined at 174 that a search path between a first location and a second location extends through at least one of the patterns having at least one item relevant to movement. A path finding algorithm can then be used at 175 to determine a path of movement within the determined at least one pattern through which the search path extends.

In accordance with an example the method comprises adjusting at least one of the points where the search path crosses the border of a pattern.

Figure 14 shows an example of use of a local grid 180 on an area of interest indicated by grey zooming tiles 181. Two no-fly zones 182, 183 cross tile boundaries, and thus the small zoom tiles 181 are combined into a larger rectangle providing the grid 180. The local grid 180 covers a rectangular area such that all grey zooming tiles 181 are within the grid. The path finding algorithm is then applied to the grid 180 rather that the smallest tiles 181. Figure 14 also illustrates use of a shared grid in such occasion but similar principle can be applied to a single obstacle. This may be advantageous, e.g., with oddly shaped obstacles, for example.

Figure 15 shows a shared local grid 185. Multiple no-go zones can be located on the search path such that the local grids may produce overlapping or close local grids. A shared local grid may be generated to cover the two or more zones. Use of the shared grid may make it more efficient to find a path through an area than analysing overlapping grids. Shared grids may also reduce a risk of incorrect result caused by path finding algorithm on one grid producing a result path that could intersect with a no-fly zone present in an overlapping grid.

In accordance with an example grid 185 of Figure 15 can be derived from the grid 180 of Figure 14 or defined based on information of the obstacle(s). It is noted that grid 180 of Figure 14 is shown by a dashed line in Figure 15 to illustrate the difference in the size of grids 180 and 185. The periphery of the grid 180 may be defined by the zoom tiles 181. Size of grid 185 can be optimised from the size determined by the zoom tiles by minimising the distance between the borders of the obstacles 182 and 183 and the grid 185. The path finding and straightening operations can then be applied to the area of the optimised grid 185.

The local grid 185 for multiple no-fly zones or other no-go areas can also be provided on xy coordinate system for example such that when there are NFZs 182 and 183 in a local area, the left hand side of the NFZ 182 provides x min value. If this NFZ is also highest / extends furthest in the y direction it also provides y max value to the grid. The right-hand side of NFZ 183 then provides x max value. Again, because NFZ 183 provides the lowest point on the coordinate system it can also provide y min value to the grid in Figure 15. Thus a shared grid may be generated that covers the two or more zones using area defined by x min, x max, y min and y max values. Appropriate padding can be used to ensure sufficient clearance between the obstacle(s) and the grid border.

Figure 15 solution can have some benefit, e.g., when there is one no-go zone that extends over several zooming tiles, resulting a relatively large grid.

Both solutions to define the grid can be used, either separately or combined. For example, there can be e.g. one NFZ close to end of the path and two NFZs which are close to the start. The local grid of Figure 15 is created around the NFZs to keep the size of the grid as small as possible. The two NFZs close to each other can be combined using the y max, y min, x max and x min determined based on the grey zooming tiles.

In accordance with a possible operation an initial grid is received based on the zooming tiles. In the initial scenario the parameters can include UAV coordinates, target location coordinates, and no-fly zone polygon coordinates. To find a path from UAV location to the target location without crossing the no-fly zone a 2D grid that corresponds to the real-world area may be created. Existing 2D grid-based path finding algorithm is applied to the 2D grid. The solution path is converted to back to real-world coordinates where after the path may be cleaned from excess waypoints.

In accordance with a possible scenario there can be a long distance from start to target location while there are also some no-fly zones scattered around the area. To avoid creating a massive grid and avoid performance issues, grids can be crated only around no-fly zones that are on the direct path from start to target. Each of the grid is then solved as explained above. Overlapping grids may be combined to one grid.

The configuration can be such that the path finding algorithm is only used to patterns with items relevant to movement that have reached a predefined pattern size. A pattern that has reached the maximum zoom level (Z_{Max}), i.e., covers the predefined smallest area, still covers any part of a no-go area such as a NFZ can be handled using any appropriate path finding algorithm. For example, an area within an identified pattern with an NFZ can be prepared for and handled by an appropriate 2-dimentional or 3-dimentional path finding algorithm with required accuracy. The larger zoom patterns can be assumed to be free of no-go areas, and therefore the path can be defined using a straightforward algorithm, for example be given a straight shortest path through the pattern.

A path search algorithm may create several paths and calculate lengths for each of the paths. The algorithm can be configured to return the shortest path as a solution. Other parameters like wind speed, direction of wind may be used as additional parameters when deciding the shortest path.

These principles can be used, for example, for drone path generator over larger operation areas. For example, control areas covering land areas greater than 100x100 km with accuracy of several meters can be provided. It is possible to add and remove non-fly zones or the like areas in run time, since a non-fly zone may affect only one or a few zoom tiles.

An apparatus may comprise memory for storing information of patterns and/or grids covering sectors of a controlled area, the stored information comprising determination whether there is at least one item relevant to movement in the area. Processor apparatus can be configured for determining that a search path between a first location and a second location crosses at least one pattern or tile having at least one item relevant to movement in the area for using a path finding algorithm to determine a path of movement within the determined at least one pattern having at least one item relevant to movement in the area.

In accordance with a non-limiting example control information may be transmitted to an unmanned device as Micro Air Vehicle Link (MAVLink) commands. MAVLink is an open source, point-to-point communication protocol used between a ground control station and unmanned vehicles to carry telemetry and to command and control unmanned vehicles. It may be used to transmit the orientation of an unmanned vehicle, its GPS location and speed. The MAVLink protocol operates at the application layer. It is noted that MAVLink is only given herein as an illustrative example of a protocol operating at this level for this purpose, and other protocols and message sizes may be used instead of this.

Unmanned vehicles may form a swarm. One of such unmanned vehicles may be configured to act as the leader of the swarm, and a path of movement may only need to be defined for the leader.

It is noted that although Figure 1 depicts an unmanned aerial vehicle comprising rotors, other types of UAV are possible and the principles are also applicable to systems not needing to comprise any rotors. For example, an unmanned vehicle may be a lighter-than-air gas balloon with thrusters, a miniature aircraft, miniature helicopter or even a full-sized light aircraft. The location of the unmanned vehicle may be controlled and instructed by using a positioning system such as GPS or Galileo for example.

The control apparatuses described herein can comprise appropriate circuitry. As used in this specification, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The required data processing apparatus and functions may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASystem InformationC), gate level circuits and processors based on multi core processor architecture, as non-limiting examples. The data processing may be distributed across several data processing modules. A data processor may be provided by means of, for example, at least one chip. Appropriate memory capacity can be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory. One or more of the steps discussed in relation to the flow and signaling charts may be performed by one or more processors in conjunction with one or more memories.

An appropriately adapted computer program code product or products may be used for implementing the embodiments, when loaded or otherwise provided on an appropriate data processing apparatus. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

A control apparatus for controlling a device may comprise means for movement control in an area, the apparatus comprising means for determining travel between a first point and a second point by determining an initial path past an obstacle between the first point and the second point, the initial path comprising at least a third point and a fourth point between the first point and the second point, the at least two points between the first point and the second point being turn points where a direction of the travel changes, and in response to determining that a line between two of the points bypassing at least one of the turn points does not intersect the obstacle, removing the at least one turn point from the initial path to determine a straightened path of travel.

## Claims

1. A vehicle or other movable device comprising data processor means (27) configured to:
determine zoom tiles on a grid and determine at least one zoom tile (143) that has at least one obstacle (155) on a path of travel (157) to be followed by the vehicle or other moveable device,
divide the determined at least one zoom tile into smaller zoom tiles (147) and determine at least one of the smaller zoom tiles with at least one obstacle (155),
repeat the dividing until a predefined smallest zoom tile size (151) is reached,
determine an initial path past the at least one obstacle within at least one zoom tile (147) of the predefined smallest zoom tile size (151), between a first point (An) and a second point (Bn) using a path finding algorithm, wherein the initial path comprises at least two turn points between the first point and the second point,
determine whether a straight line between two of the points and bypassing at least one of the turn points intersects the obstacle, and
determine a straightened path of travel, within the at least one zoom tile of the predefined smallest zoom tile size, in response to determination that the straight line between two of the points and bypassing the at least one of the turn points does not intersect the obstacle by removing the at least one bypassed turn point from the initial path.

2. A vehicle or other movable device according to claim 1, wherein the data processor means are configured to use real-world coordinates in determining whether a straight line bypassing at least one of the turn points intersects the obstacle.

3. A vehicle or other movable device according to any preceding claim, wherein the data processor means are configured to repeat the determining whether a line between two points and bypassing at least one turn point intersects with the obstacle until there are no more turn points to be tested.

4. A vehicle or other movable device according to any preceding claim, wherein the data processor means are configured to generate a path of travel between a start point and a target point based on a combination of information of the straightened path (154) and at least one search path (157, 158) outside the at least one determined zoom tile (151).

5. A vehicle or other movable device according to any preceding claim, wherein the data processor means are configured to apply a path finding algorithm only to zoom tiles (151) that have been determined to have at least one obstacle (155, 156) and assume that there are no obstacles in areas (140, 142, 148) outside the determined zoom tiles.

6. A vehicle or other movable device according to any preceding claim, wherein the data processor means are configured to further determine the first and second points (An, Bn) to be points between which grid based path finding algorithm around the obstacle is used.

7. A vehicle or other movable device according to any preceding claim, wherein the data processor means are configured to:
determine zoom tiles provided with the at least two turn points in the determined path around the obstacle,
convert the zoom tile coordinates of the at least two turn points and the first and second points in the determined path around the obstacle to real-world coordinates,
select at least three points from the at least two turn points and the first and second points wherein the three points are consecutive,
determine a line between the first point and third point of the consecutive points, and
determine whether the straight line and the obstacle intersect, and if no intersection, remove the middle point of the consecutive points and use the straight line as part of the straightened path, or if intersection found keep the second waypoint as part of the straightened path.

## Patentansprüche

1. Fahrzeug oder andere bewegbare Vorrichtung, das bzw. die ein Datenprozessormittel (27) umfasst, das zu Folgendem ausgelegt ist:
Bestimmen von Zoomkacheln auf einem Gitter und Bestimmen von mindestens einer Zoomkachel (143), die mindestens ein Hindernis (155) auf einem Fahrpfad (157) aufweist, dem das Fahrzeug oder die andere bewegbare Vorrichtung zu folgen hat,
Teilen der mindestens einen bestimmten Zoomkachel in kleinere Zoomkacheln (147) und Bestimmen von mindestens einer der kleineren Zoomkacheln mit mindestens einem Hindernis (155),
Wiederholen des Teilens, bis eine vordefinierte kleinste Zoomkachelgröße (151) erreicht ist,
Bestimmen eines Anfangspfads hinter dem mindestens einen Hindernis in mindestens einer Zoomkachel (147) der vordefinierten kleinsten Zoomkachelgröße (151) zwischen einem ersten Punkt (An) und einem zweiten Punkt (Bn) unter Verwendung eines Pfadsuchalgorithmus, wobei der Anfangspfad zwischen dem ersten Punkt und dem zweiten Punkt mindestens zwei Wendepunkte umfasst,
Bestimmen, ob durch eine gerade Linie zwischen zwei der Punkte und Umgehen von mindestens einem der Wendepunkte das Hindernis geschnitten wird, und
in Reaktion auf die Bestimmung, dass durch die gerade Linie zwischen zwei der Punkte und Umgehen von dem mindestens einen der Wendepunkte das Hindernis nicht geschnitten wird, Bestimmen eines gerichteten Fahrpfads in der mindestens einen Zoomkachel der vordefinierten kleinsten Zoomkachelgröße durch Entfernen des mindestens einen umgangenen Wendepunkts aus dem Anfangspfad.

2. Fahrzeug oder andere bewegbare Vorrichtung nach Anspruch 1, wobei das Datenprozessormittel dazu ausgelegt ist, zum Bestimmen, ob durch eine gerade Linie, die mindestens einen der Wendepunkte umgeht, das Hindernis schneidet, Koordinaten der realen Welt zu verwenden.

3. Fahrzeug oder andere bewegbare Vorrichtung nach einem der vorhergehenden Ansprüche, wobei das Datenprozessormittel dazu ausgelegt ist, das Bestimmen, ob durch eine Linie zwischen zwei Punkten und Umgehen von mindestens einem Wendepunkt das Hindernis geschnitten wird, zu wiederholen, bis es keine zu testenden Wendepunkte mehr gibt.

4. Fahrzeug oder andere bewegbare Vorrichtung nach einem der vorhergehenden Ansprüche, wobei das Datenprozessormittel dazu ausgelegt ist, auf Basis einer Kombination von Informationen des gerichteten Pfades (154) und mindestens eines Suchpfads (157, 158) außerhalb der mindestens einen bestimmten Zoomkachel (151) zwischen einem Startpunkt und einem Zielpunkt einen Fahrpfad zu erzeugen.

5. Fahrzeug oder andere bewegbare Vorrichtung nach einem der vorhergehenden Ansprüche, wobei das Datenprozessormittel dazu ausgelegt ist, einen Pfadsuchalgorithmus nur auf Zoomkacheln (151) anzuwenden, von denen bestimmt wurde, dass sie mindestens ein Hindernis (155, 156) aufweisen, und anzunehmen, dass sich in Bereichen (140, 142, 148) außerhalb der bestimmten Zoomkacheln keine Hindernisse befinden.

6. Fahrzeug oder andere bewegbare Vorrichtung nach einem der vorhergehenden Ansprüche, wobei das Datenprozessormittel dazu ausgelegt ist, ferner zu bestimmen, dass der erste und der zweite Punkt (An, Bn) Punkte sind, zwischen denen ein gitterbasierter Pfadsuchalgorithmus um das Hindernis verwendet wird.

7. Fahrzeug oder andere bewegbare Vorrichtung nach einem der vorhergehenden Ansprüche, wobei das Datenprozessormittel zu Folgendem ausgelegt ist:
Bestimmen von Zoomkacheln, die mit den mindestens zwei Wendepunkten im bestimmten Pfad um das Hindernis versehen sind,
Umwandeln der Zoomkachelkoordinaten der mindestens zwei Wendepunkte und des ersten und des zweiten Punkts im bestimmten Pfad um das Hindernis in Koordinaten der realen Welt,
Auswählen von mindestens drei Punkten von den mindestens zwei Wendepunkten und des ersten und des zweiten Punkts, wobei die drei Punkte aufeinanderfolgend sind,
Bestimmen einer Linie zwischen dem ersten Punkt und dem dritten Punkt der aufeinanderfolgenden Punkte, und
Bestimmen, ob sich die gerade Linie und das Hindernis schneiden, und, wenn es keine Überschneidung gibt, Entfernen des mittleren Punktes der aufeinanderfolgenden Punkte und Verwenden der geraden Linie als Teil des gerichteten Pfades oder, wenn es eine Überschneidung gibt, Beibehalten des zweiten Wegpunkts als Teil des gerichteten Pfades.

## Revendications

1. Véhicule ou autre dispositif mobile comprenant des moyens de traitement de données (27) configurés pour :
déterminer des carreaux de zoom sur une grille et déterminer au moins un carreau de zoom (143) qui comporte au moins un obstacle (155) sur un chemin de déplacement (157) à suivre par le véhicule ou autre dispositif mobile,
diviser le au moins un carreau de zoom déterminé en carreaux de zoom (147) plus petites et déterminer au moins un des carreaux de zoom plus petites comportant au moins un obstacle (155),
répéter la division jusqu'à ce qu'une taille de carreau de zoom (151) prédéfinie la plus petite soit atteinte,
déterminer un chemin initial devant le au moins un obstacle à l'intérieur d'au moins un carreau de zoom (147) de la taille de carreau de zoom (151) prédéfinie la plus petite, entre un premier point (An) et un deuxième point (Bn) à l'aide d'un algorithme de recherche de chemin, dans lequel le chemin initial comprend au moins deux points de virage entre le premier point et le deuxième point,
déterminer si une ligne droite entre deux des points et contournant au moins un des points de virage coupe l'obstacle, et
déterminer un chemin de déplacement redressé à l'intérieur d'au moins un carreau de zoom de la taille de carreau de zoom prédéfinie la plus petite, en réponse à la détermination du fait que la ligne droite entre deux des points et contournant le au moins un des points de virage ne coupe pas l'obstacle, en supprimant le au moins un point de virage contourné du chemin initial.

2. Véhicule ou autre dispositif mobile selon la revendication 1, dans lequel les moyens de traitement de données sont configurés pour utiliser des coordonnées du monde réel en déterminant si une ligne droite contournant au moins un des points de virage coupe l'obstacle.

3. Véhicule ou autre dispositif mobile selon l'une des revendications précédentes, dans lequel les moyens de traitement de données sont configurés pour répéter de déterminer si une ligne entre deux points et contournant au moins un point de virage coupe l'obstacle jusqu'à ce qu'il n'y ait plus de points de virage à tester.

4. Véhicule ou autre dispositif mobile selon l'une des revendications précédentes, dans lequel les moyens de traitement de données sont configurés pour générer un chemin de déplacement entre un point de départ et un point cible sur la base d'une combinaison d'informations du chemin redressé (154) et au moins un chemin de recherche (157, 158) à l'extérieur du au moins un carreau de zoom (151) déterminé.

5. Véhicule ou autre dispositif mobile selon l'une des revendications précédentes, dans lequel les moyens de traitement de données sont configurés pour appliquer un algorithme de recherche de chemin uniquement à des carreaux de zoom (151) qui ont été déterminés comme comportant au moins un obstacle (155, 156) et supposer qu'il n'y a pas d'obstacles dans des zones (140, 142, 148) à l'extérieur des carreaux de zoom déterminés.

6. Véhicule ou autre dispositif mobile selon l'une des revendications précédentes, dans lequel les moyens de traitement de données sont configurés pour déterminer en outre les premier et deuxième points (An, Bn) comme étant des points entre lesquels est utilisé un algorithme de recherche de chemin basé sur une grille autour de l'obstacle.

7. Véhicule ou autre dispositif mobile selon l'une des revendications précédentes, dans lequel les moyens de traitement de données sont configurés pour :
déterminer des carreaux de zoom pourvus des au moins deux points de virage dans le chemin déterminé autour de l'obstacle,
convertir en coordonnées du monde réel les coordonnées de carreau de zoom des au moins deux points de virage et des premier et deuxième points dans le chemin déterminé autour de l'obstacle,
sélectionner au moins trois points parmi les au moins deux points de virage et les premier et deuxième points, les trois points étant consécutifs,
déterminer une ligne entre le premier point et le troisième point des points consécutifs, et
déterminer si la ligne droite et l'obstacle se coupent, et en l'absence d'intersection, supprimer le point central des points consécutifs et utiliser la ligne droite comme partie du chemin redressé, ou si une intersection est trouvée, conserver le deuxième point de passage comme partie du chemin redressé.
